# EUROPEAN PATENT APPLICATION

(11) **EP 2 068 479 A1**
(43) Date of publication of application: **10.06.2009**
(21) Application number: 07828952.7
(22) Date of filing: 01.10.2007
(51) Int. Cl.: H04J 15/00, H04B 7/04

(54) **BASE STATION DEVICE**

(30) Priority: 03.10.2006 JP 2006272343
(71) Applicant: NTT DoCoMo, Inc., Chiyoda-ku Tokyo 100-6150 (JP)
(72) Inventor: HIGUCHI, Kenichi, Tokyo 100-6150 (JP); KISHIYAMA, Yoshihisa, Tokyo 100-6150 (JP); SAWAHASHI, Mamoru, Tokyo 100-6150 (JP)
(74) Representative: HOFFMANN EITLE
(86) International application number: PCT/JP2007/069212
(87) International publication number: WO 2008/041677

(57) **Abstract**

A base station apparatus is disclosed. The base station includes multiple antennas; a first pre-encode processing unit which multiplies one or more first weights with one or more common pilot channels; a second pre-encode processing unit which multiplies, with the one or more common pilot channels, one or more second weights which are orthogonal to the first weights; and a combining unit which combines the first-weights-multiplied common pilot channels and the second-weights-multiplied common pilot channels, wherein the combined common pilot channels are transmitted from the multiple antennas.

## Description

### BACKGROUND OF THE INVENTION

### 1. Field of the Invention

The present invention generally relates to the technical field of wireless communications, and particularly relates to base station apparatuses for use in multi-antenna systems.

### 2. Description of the Related Art

In this type of technical field, a number of multi-antenna systems and multi-antenna transmission schemes are being proposed for future mobile communications systems from points of view of increasing the speed and quality of information transmission. In the multi-antenna systems, multiple antennas are used for transmitting and/or receiving data, effectively utilizing not only frequency and time but also space. The multi-antenna transmission schemes generally include MIMO (Multiple Input Multiple Output) multiplexing, MIMO diversity, and Adaptive array antenna (AAA).

Here, the MIMO diversity is described in association with the present invention.

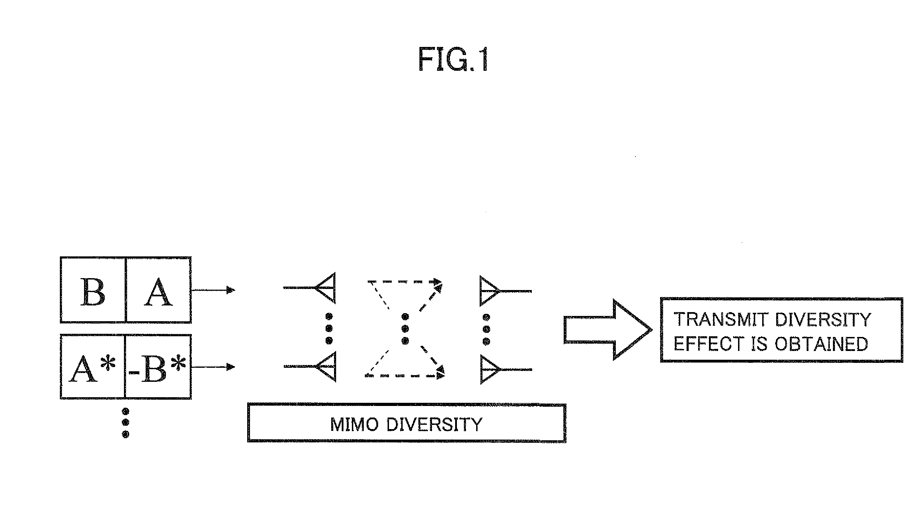

FIG. 1 is a drawing for explaining the concepts of the MIMO diversity. The MIMO diversity is a scheme for transmitting, in parallel from multiple transmit antennas, multiple streams of the same contents, seeking to improve the reliability at the receiver. In the illustrated example, two symbols A and B are transmitted from one transmit antenna in the order of A and B, and from the other antenna in the order of -B* and A*. The letter "-" represents the negative sign, while the superscript "*" represents complex conjugation. The scheme to convert symbols to be transmitted (A, B) to such two streams is called STBC (Space Time Block Coding), or, simply, linear processing. Successively received at the receiver are A-B* and B+A*, from which signals, transmitted symbols A and B are estimated. The two signals transmitted from the two antennas are subject to different fading, so that appropriately combining at the receiver improves the reliability of the received signal. The MIMO diversity is disclosed in Non-patent document 1, for example.
Non-patent document 1: V.Tarokh, H. Jafarkhani, and R.Calderbank: "Space-Time Block Coding for Wireless Communications: Performance Results", IEEE J. Select. Areas Commun., Vol.17, No.3, pp.451-460, Mar.1999

### SUMMARY OF THE INVENTION

### [Problem(s) to be solved by the Invention]

In the communications apparatus as described above, pilot channels for both of the streams are always transmitted regardless of a channel to be transmitted. Thus, there is a problem that the pilot overhead at the time of the MIMO transmission becomes large.

For example, in a communications apparatus with four antennas, the pilot channels for the four streams are transmitted even when transmitting a common control channel is desired. In this case, the pilot channels for the two streams are wasted as they are not used for demodulating the common control channel.

The present invention, which seeks to solve the problems as described above, aims to provide a base station apparatus which allows performing basic functions of a pilot channel (i.e., cell search, handover, CQI measurement, control channel demodulation, data channel demodulation at the mobile station), thus making it possible to reduce the overhead of the pilot channels at the time of MIMO transmission.

### [Means for solving the Problem]

In order to solve the problem as described above, a base station apparatus of the present invention includes multiple antennas; a first pre-encode processing unit which multiplies one or more first weights with one or more common pilot channels; a second pre-encode processing unit which multiplies, with the one or more common pilot channels, one or more second weights which are orthogonal to the first weights; and a combining unit which combines the first-weights-multiplied common pilot channels and the second-weights-multiplied common pilot channels, wherein the combined common pilot channels are transmitted from the multiple antennas.

In this way, the common control channels which are demodulated using the common pilot channels are unitarily pre-coded with the first and second weights which are the same as for the common pilot channels, and applying transmit diversity for transmitting makes it possible to demodulate, at the receiver, with two common pilot channels regardless of the number of antennas of the base station.

Moreover, especially when the number of antennas is no less than four, transmit power amplifiers for all of the antennas may be used, making it possible to improve the transmit power of the common pilot channels.

### [Advantage of the Invention]

The embodiments of the present invention make it possible to realize a base station apparatus which allows performing basic functions of a pilot channel (i.e., cell search, handover, CQI measurement, control channel demodulating, data channel demodulating at the mobile station apparatus), thus making it possible to reduce the pilot overhead at the time of the MIMO transmission.

### BRIEF DESCRIPTION OF THE DRAWINGS

FIG. 1 is a conceptual diagram for explaining MIMO diversity;
FIG. 2 is an explanatory diagram for explaining transmission of pilot signals with no pre-encoding applied;
FIG. 3 is an explanatory diagram for explaining transmission of the pilot signals with pre-encoding applied;
FIG. 4 is a partial block diagram illustrating a base station apparatus according to an embodiment of the present invention;
FIG. 5 is an explanatory diagram illustrating the MIMO diversity;
FIG. 6 is an explanatory diagram illustrating an example of mapping of common control channels and common pilot channels.
Fig. 7 is an explanatory diagram illustrating an example of mapping of L1/L2 control channels and the common pilot channels;
FIG. 8 is a partial block diagram illustrating the base station apparatus according to an embodiment of the present invention;
FIG. 9 is an explanatory diagram illustrating an example of mapping of a pilot channel for CQI measurement;
FIG. 10 is a partial block diagram illustrating the base station apparatus according to an embodiment of the present invention;
FIG. 11 is an explanatory diagram illustrating an example of mapping of dedicated pilot channels; and
FIG. 12 is a partial block diagram illustrating a mobile station apparatus according to an embodiment of the present invention.

### DESCRIPTION OF THE PREFERRED EMBODIMENTS

### [Description of Notations]

- 112₂, 112₃,: 100 Base station apparatus; 102, 104, 112, 116, 120 Pre-encoding processor; 102₁, 102₂, 102₃, 102₄, 104₁, 104₂, 104₃, 104₄, 112₁, 112₄, 116₁, 116₂, 116₃, 116₄, 120₁, 120₂, 120₃,
- 120₄: Multiplier; 106₁, 106₂, 106₃, 106₄, 114₁, 114₂, 114₃, 114₄, 118₁,
- 118₂, 118₃,: 118₄, 122₁, 122₂, 122₃, 122₄ Combiner; 108₁, 108₂, 108₃, 108₄ Antenna; 110 STBC encoder; 200 Mobile station apparatus;
- 231-1, 231-2: Duplexer;
- 232-1, 232-2: RF receive circuit;
- 233: Receive-timing estimating unit;
- 234-1, 234-2: FFT;
- 235: Signal detector;
- 236: Channel decoder;
- 237: Downlink L1/L2 control channel demodulator;
- 238: Channel estimating unit using common or dedicated pilot channel;
- 239-1, 239-2: Antenna;
- 241: Unit for estimating desired number of streams and stream number using common pilot channel;
- 242: Unit for estimating desired pyre-encoding vector using common pilot channel;
- 243: Unit for estimating CQI using common pilot channel

### [Best Mode of Carrying Out the Invention]

In the following, best modes for carrying out the invention are described based on the following embodiments with reference to the drawings.

Throughout the drawings for explaining the embodiments, same letters are used for those elements having the same functions, so that repetitive explanations are omitted.

A wireless communications system according to embodiments of the present invention is a MIMO communications system, the system including a base station apparatus and a mobile station apparatus. The wireless communications system adopts multiple (N_{T}, where N_{T} is an integer greater than 1) transmit antennas and multiple (N_{R}, where N_{R} is an integer greater than 1) receive antennas. A MIMO channel formed by the N_{T} transmit and N_{R} receive antennas can be divided into N_{S} independent channels with NS <= min (N_{T}, N_{R}).

Moreover, as wireless access schemes, OFDMA (Orthogonal Frequency Division Multiple Access) is applied for downlink while SC-FDMA (Single Carrier-Frequency Division Multiple Access) is applied for uplink. OFDMA is a scheme for dividing a frequency bandwidth into multiple narrow frequency bands (sub-carriers) and overlaying data onto the respective frequency bands. SC-FDMA is a transmission scheme for dividing a frequency bandwidth, and using different frequency bands among multiple terminals to make it possible to reduce interference between terminals.

Now, a base station apparatus according to a first embodiment of the present invention is described.

The present embodiment is described for the base station apparatus having four antennas, but may be applied to a case with more than one antenna.

A base station apparatus 100 according to the present embodiment transmits two fixed-value unitary pre-encoded common pilot channels at intervals at which the common control channels are transmitted (e.g., transmission time intervals (TTIs). Unitary pre-encoding means multiplying two orthogonal weights. In other words, two orthogonal weight-multiplied common pilot channels are transmitted.

The unitary pre-encoding makes it possible to use transmit power amplifiers of all antennas when the number of antennas is no less than 4. This applies not only to the common pilot channels, but also to the control channels to be demodulated. The unitary pre-encoding weights of identity matrices represent common pilot channels from two antennas.

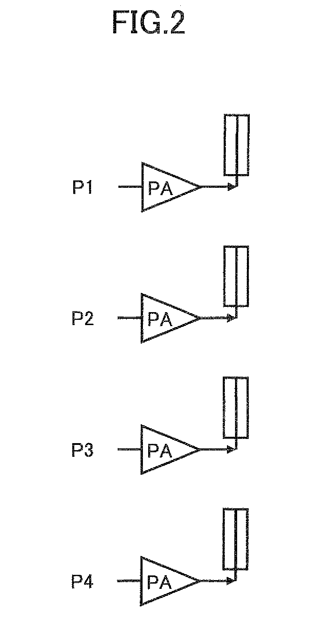

For example, as shown in FIG. 2, in a base station apparatus with 4 or more antennas, two pilot signals are transmitted from antennas #1 and #2, but not from antennas #3 and #4. As the output power of the power amplifier (PA) is limited, the output power becomes half of that for transmitting from the antennas #1-#4.

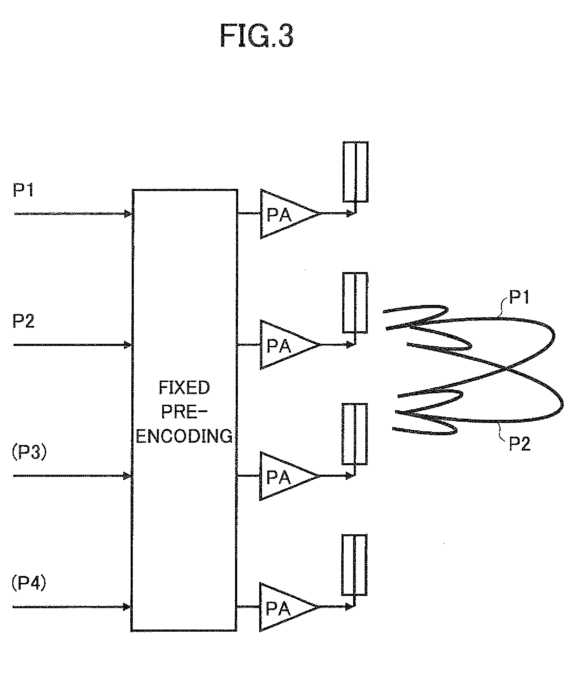

In the meantime, as shown in FIG. 3, a fixed-value pre-encoding allows transmitting using all power amplifiers, making it possible to improve the transmit power relative to the case of transmitting from two antennas. In other words, it is possible to improve the output power.

Moreover, the common control channel which is demodulated using the common pilot channel is two fixed-value unitarily pre-encoded in the same manner as for the common pilot channel to perform transmit diversity for transmitting. In this way, the mobile station apparatus can demodulate with two common pilot channels regardless of the number of antennas of the base station apparatus.

Moreover, when cell search and handover measurement (HO measurement) are performed at the mobile station, two fixed-value unitarily pre-encoded common pilot channels are used to measure receive signal power (S), or receive signal power to interference and noise power ratio (SINR) .

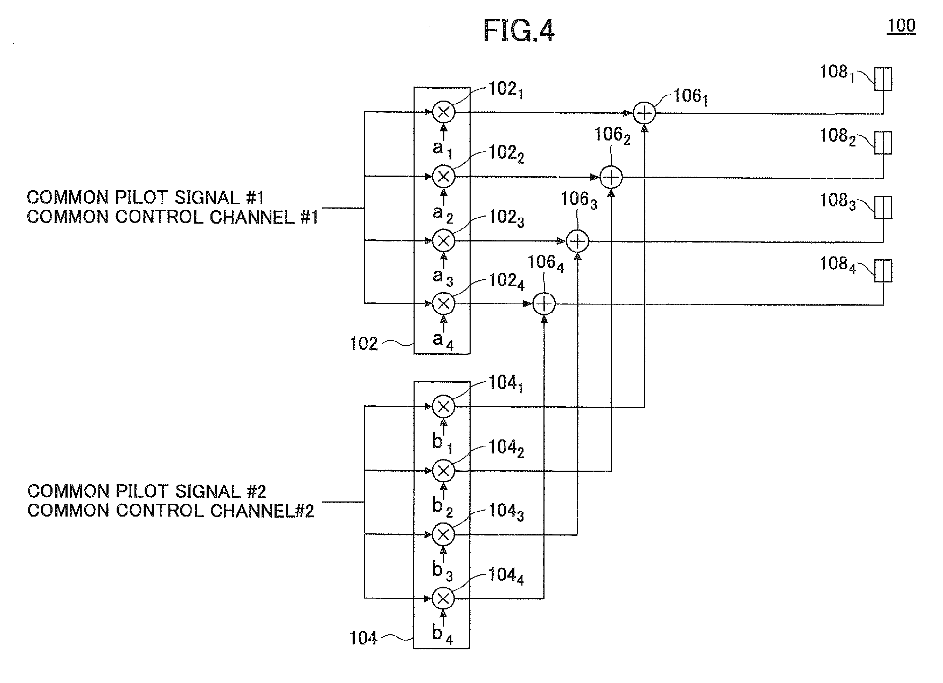

The base station 100, as shown in FIG. 4, includes a pre-encoding processor 102 as a first pre-encode processing unit into which a common pilot signal #1 and a common control channel #1 are input, a pre-encoding processor 104 as a second pre-encode processing unit into which a common pilot signal #2 and a common control channel #2 are input, combiners 106 (106₁, 106₂, 106₃, 106₄) for combining an output signal of the pre-encoding processor 102 and an output signal of the pre-encoding processor 104, and antennas 108 (108₁, 108₂, 108₃, 108₄) for transmitting output signals from the respective combiners 106.

The common pilot signals #1 and #2 are both known signals at both the base and mobile station apparatuses.

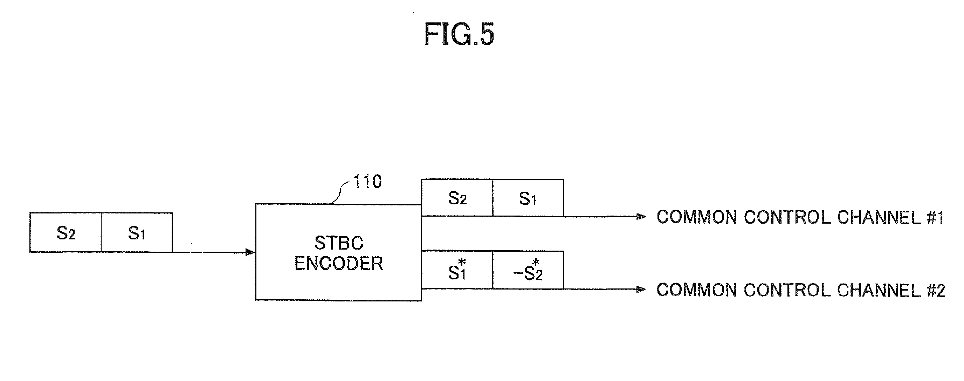

Now the common control channels #1 and #2 are described. For common control channel symbols of S₁ and S₂, as shown in FIG. 5, in the STBC encoder 110, the output to the pre-encoding processor 104 is temporally reversed with the two symbols as a pair, complex conjugated, and the polarity of the odd-numbered symbol is reversed, so as to output the pair. In FIG. 5, the letter "-" represents the negative sign, while the superscript "*" represents complex conjugation. In other words, inputting is made in the order of S₁, S₂ to the pre-encoding processor 102 and in the order of -S₂*, S₁* to the pre-encoding processor 104.

The common pilot signal #1 and the common control channel #1 are input to the pre-encoding processor 102, branching into 4 antennas.

In the pre-encoding processor 102, a pre-encoding weight "a" is multiplied with the respective input common pilot signal #1 and common control channel #1. For example, in the multipliers 102₁, 102₂, 102₃, and 102₄, the pre-encoding weights a₁, a₂, a₃, and a₄ are respectively multiplied.

Signals output from the multipliers 102₁, 1022, 102₃, and 102₄ are respectively input to the combiners 106₁, 106₂, 106₃, and 106₄.

On the other hand, the common pilot signal #2 and the common control channel #2 are input to the pre-encoding processor 104, branching into 4 antennas.

In the pre-encoding processor 104, a pre-encoding weight "b" is multiplied with the respective input common pilot signal #2 and common control channel #2. For example, in the multipliers 104₁, 104₂, 104₃, and 104₄, the pre-encoding weights b₁, b₂, b₃, and b₄ are respectively multiplied.

Here, the pre-encoding weights a and b are orthogonal to each other, which norm is set as 1. In other words, with the pre-encoding weights a=[a₁,a₂,a₃,a₄] and b= [b₁,b₂,b₃,b₄], a₁×b*₁+a₂×b*₂+a₃×b*₃+a₄×b*₄=0, and √(|a₁|²+|a+₂l²+|a₃|²+|a₄|²)=1, and √(|b₁|²+|b₂|²+|b₃|²+|b₄|²)=1 "*" represents complex conjugation.

Signals output from the multipliers 104₁, 104₂, 104₃, and 104₄ are respectively input to the combiners 106₁, 106₂, 106₃, and 106₄.

In the combiners 106₁, 106₂, 106₃, 106₄, signals output from the multipliers 102₁, 102₂, 102₃, and 102₄ are respectively combined with signals output from the multipliers 104₁, 104₂, 104₃, and 104₄.

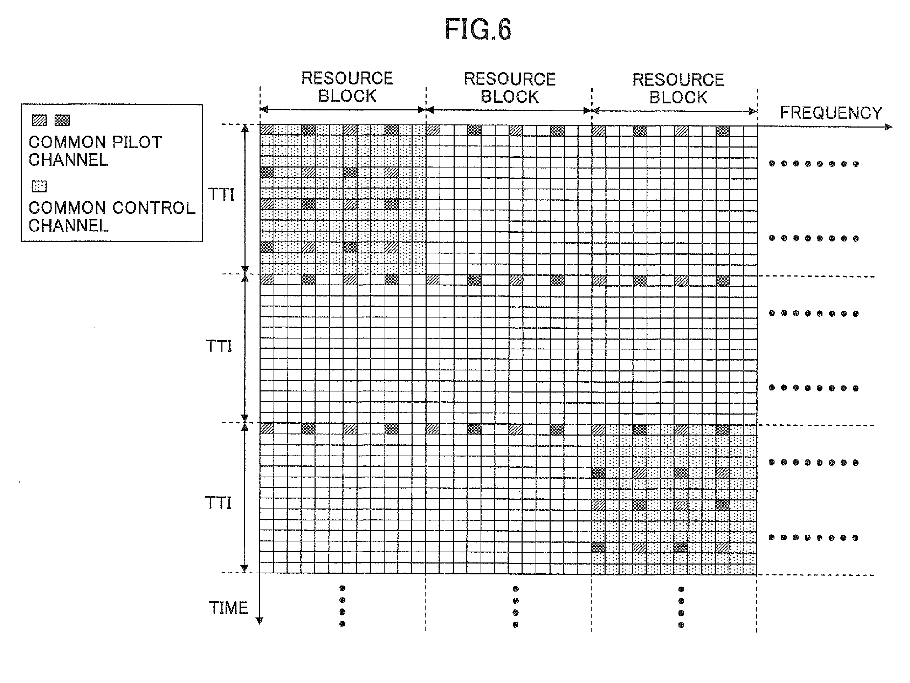

As shown in FIG. 6, common pilot channels which have been pre-encoded with the two fixed values "a" and "b" are multiplexed at respectively different time-frequency domains. In FIG. 6, an exemplary matching of the common control channels and the common pilot channels is shown. In FIG. 6, the common pilot channels which have been pre-encoded with the fixed value "a" and the common pilot channels which have been pre-encoded with the fixed value "b" are mapped at intervals.

The combined signals are respectively transmitted from the antennas 108₁, 108₂, 108₃, and 108₄. In other words, the combined common pilot channels are transmitted from multiple antennas.

Now a base station apparatus according to a second embodiment of the present invention is described.

The present embodiment is also described for the base station apparatus having four antennas, but may be applied to a case with more than one antenna.

A base station apparatus 100 according to the present embodiment transmits two fixed-value unitary pre-encoded common pilot channels at intervals at which L1/L2 control channels are transmitted (e.g., transmission time intervals (TTIs)).

The unitary pre-encoding makes it possible to use transmit power amplifiers of all antennas when the number of antennas is no less than 4. This applies not only to the common pilot channels, but also to the control channels to be demodulated. The unitary pre-encoding weights being identity matrices represent common pilot channels from two antennas.

Now, the structure of the L1/L2 control channels is described.

Information common to users (e.g., information indicating either one of multi-user and single-user) and user-specific information (e.g., information on the number of streams, information indicating either one of localized transmission and distributed transmission) are pre-reported, with a high-layer control signal, to the mobile station. Here, localized transmission is a transmitting scheme which allocates contiguous sub-carriers as one block, while distributed transmission is a transmitting scheme which distributes sub-carriers over a bandwidth to allocate the distributed sub-carriers.

The L1/L2 control channel contains the following information:
(1) allocated resource-block information
(2) information on pre-encoding vectors used per stream for the number of streams. When the relationship is predetermined on a one-on-one basis between the stream number and the pre-encoding vector, only the stream number used may be reported.
(3) MCS per stream (modulation scheme and encoding rate)
   In principle, sending is performed for the number of streams, but when using a modulation scheme and encoding rate common among the streams, sending is performed only once.
(4) Information related to hybrid ARQ
   In principle, sending is performed for the number of streams, but when transmitting the same encoding block signal for the multiple streams, sending is performed only once.
(5) UE ID information
   Of the information items as described above, information item (1) is encoded (encoding block 1). In the meantime, information items (2) to (5) are collectively encoded (encoding block 2), where CRC bits are collectively transmitted with the information items (2) through (4), with the CRC bits convolved with the information item (5) .

In other words, the L1/L2 control channels are divided into two encoding blocks 1 and 2 to encode the divided blocks. The encoding block 1 includes the allocated resource block information (1). The encoding block 2 includes pre-encoding information, MCS information, hybrid ARQ (HARQ) information, and a convolution of the CRC bit and the UE ID ((2) + (3) + (4) + (5) x CRC). The encoding block 2 varies in length according to the number of streams.

For decoding the L1/L2 control channels at the mobile station, the encoding block 1 is decoded, and, next, (2) through (5) are decoded based on such information as described above. The information lengths of (2) through (5) vary in length according to the number of streams. However, as the number-of-streams information is decoded in advance, there is no need to assume the multiple information lengths to attempt decoding the information items (2) through (5).

Moreover, the L1/L2 control channels may be configured as per below.

Information common to users (e.g., information indicating either one of multi-user and single-user) and user-specific information (e.g., information indicating either one of localized transmission and distributed transmission) are pre-reported to the mobile station with a high-layer control signal.

The L1/L2 control channel contains the following information:
(1) allocated resource-block information
(2) number-of-streams information
(3) information on pre-encoding vectors used per stream for the number of streams.
   When the relationship is predetermined on a one-on-one basis between the stream number and the pre-encoding vector, only the stream number used may be reported.
(4) MCS per stream (modulation scheme and encoding rate)
   In principle, sending is performed for the number of streams, but when using a modulation scheme and encoding rate common among the streams, sending is performed only once.
(5) Information related to hybrid ARQ
   In principle, sending is performed for the number of streams, but when transmitting the same encoding block signal for the multiple streams, sending is performed only once.
(6) UE ID information
   Of the information items as described above, information items (1) and (2) are collectively encoded (encoding block 1). On the other hand, CRC bits are added to information items (3) and (5) as a collection of information and the CRC bits are convolved with the IE ID information (6) to transmit the convolved result (encoding block 2).

The L1/L2 control channels are divided into two encoding blocks 1 and 2 to encode the divided blocks. The encoding block 1 includes the allocated resource block information and the number-of-streams information ((1) and (2)). The encoding block 2 includes pre-encoding information, MCS information, hybrid ARQ (HARQ) information, and a convolution of the CRC bits and the UE ID ((3) + (4) + (5) + (6) x CRC). The encoding block 2 varies in length according to the number of streams.

For decoding the L1/L2 control channels at the mobile station, the encoding block 1 is first decoded to recognize the number of streams. Next, the encoding block 2 is decoded based on the information as described above. The information length of the encoding block 2 varies according to the number of streams. However, as the encoding block 1 is decoded in advance, there is no need to assume the multiple information lengths to attempt decoding the encoding block 2.

The configuration of the base station apparatus is the same as that of the base station apparatus described with reference to FIG. 4. The common pilot signal #1 and the L1/L2 control channel #1 are input to the pre-encoding processor 102. The common pilot signal #2 and the L1/L2 control channel #2 are input to the pre-encoding processor 104.

Now L1/L2 control channel #1 and L1/L2 control channel #2 are described. For common control channel symbols of S₁ and S₂, as shown in FIG. 5, in the encoder 110, the output to the pre-encoding processor 104 is temporally reversed with the two symbols as a pair, complex conjugated, and the polarity of the odd-numbered symbol is reversed, so as to output the pair. In other words, inputting is made in the order of S₁, S₂ to the pre-encoding processor 102 and in the order of -S₂*, S₁* to the pre-encoding processor 104.

The common pilot signal #1 and the L1/L2 control channel #1 are input to the pre-encoding processor 102, branching into 4 antennas.

In the pre-encoding processor 102, a pre-encoding weight "a" is multiplied with the respective input common pilot signal #1 and L1/L2 control channel #1. For example, in the multipliers 102₁, 102₂, 102₃, and 102₄, the pre-encoding weights a₁, a₂, a₃, and a₄ are respectively multiplied.

Signals output from the multipliers 102₁, 102₂, 102₃, and 102₄ are respectively input to the combiners 106₁, 106₂, 106₃, and 106₄.

On the other hand, the common pilot signal #2 and the L1/L2 control channel #2 are input to the pre-encoding processor 104, branching into 4 antennas.

In the pre-encoding processor 104, a pre-encoding weight "b" is multiplied with the respective input common pilot signal #2 and L1/L2 control channel #2. For example, in the multipliers 104₁, 104₂, 104₃, 104₄, the pre-encoding weights b₁, b₂, b₃, and b₄ are respectively multiplied.

Here, the pre-encoding weights a and b are orthogonal to each other, which norm is set as 1.

Signals output from the multipliers 104₁, 104₂, 104₃, and 104₄ are respectively input to the combiners 106₁, 106₂, 106₃, and 106₄.

In the combiners 106₁, 106₂, 106₃, and 106₄, signals output from the multipliers 102₁, 102₂, 102₃, and 102₄ are respectively combined with signals output from the multipliers 104₁, 104₂, 104₃, and 104₄.

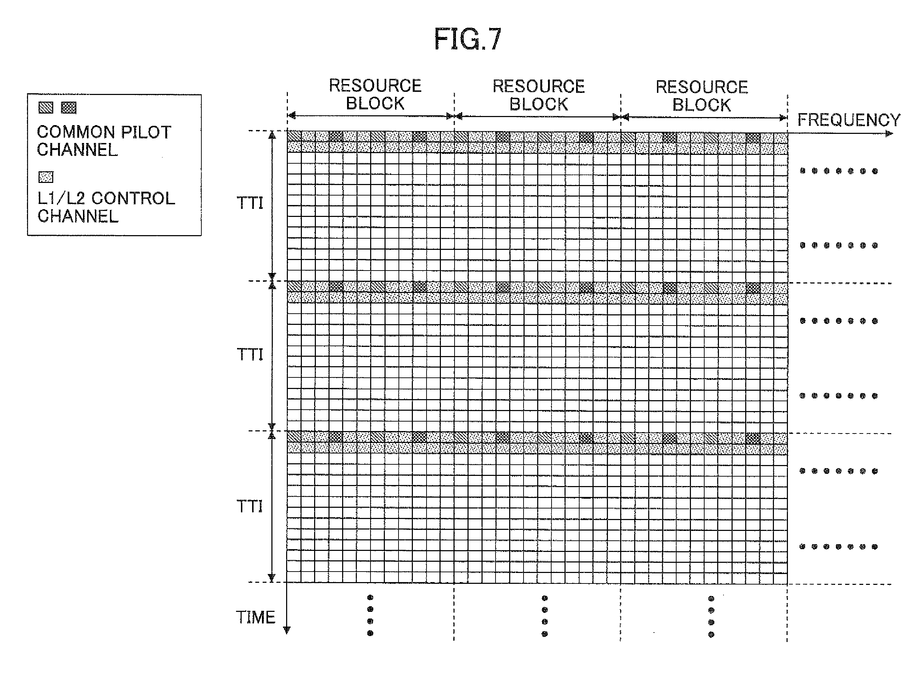

As shown in FIG. 7, common pilot channels which have been pre-encoded with the two fixed values a and b are multiplexed at respectively different time-frequency domains. In FIG. 7, an exemplary matching of the L1/L2 control channels and the common pilot channels is shown. In FIG. 7, the L1/L2 control channels are mapped into two symbols in the time domain. In the domain in which the L1/L2 control channels are mapped, the fixed value "a" pre-encoded common pilot channel and the fixed value "b" pre-encoded common pilot channel are mapped at intervals in the frequency domain.

The combined signals are respectively transmitted from the antennas 108₁, 108₂, 108₃, and 108₄.

Now, a base station apparatus according to a third embodiment of the present invention is described.

The present embodiment is described for the base station apparatus having four antennas, but may be applied to a case with more than one antenna.

The base station apparatus 100 according to the present embodiment also transmits the remaining unitary pre-encoded common pilot channels only at intervals at which a CQI is measured. Here, two common pilot channels are added. These added common pilot channels as the second pilot channel are formed of the number of symbols, which number is a minimum required for the CQI measurement. For example, the density is set to be smaller than that of the two basic (first) common pilot channels.

In the CQI measurement, the mobile station apparatus needs to measure the CQI for all antennas. Moreover, as it is not the case that the CQI measurement is performed all the time, the base station apparatus 100 adds the second common pilot channel for CQI measurement only at the timing that the CQI is measured.

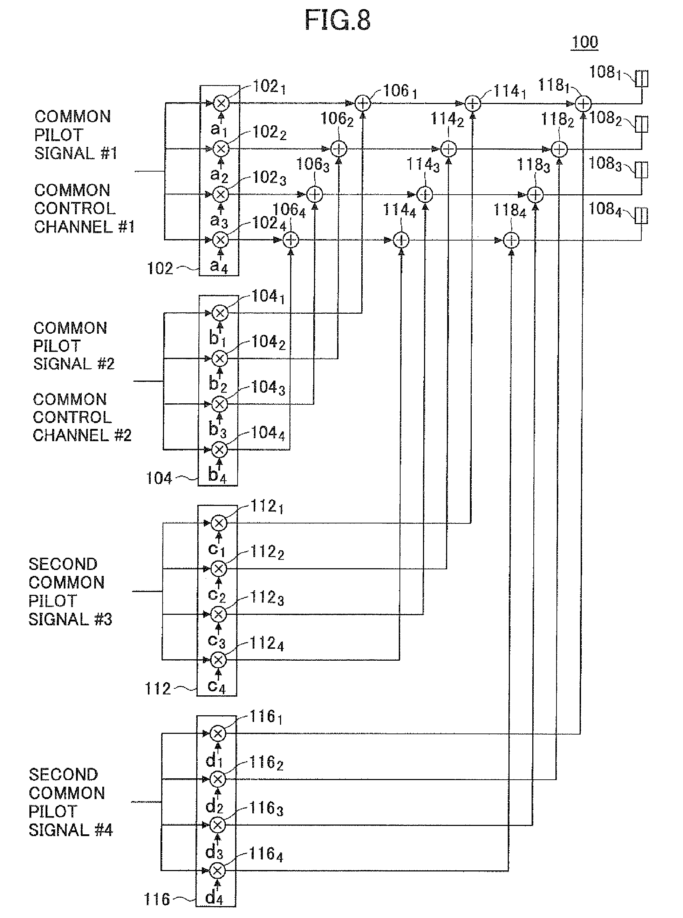

As shown in FIG. 8, the base station apparatus 100 includes a pre-encoding processor 102, into which a common pilot signal #1 and a common control channel #1 are input, a pre-encoding processor 104, into which a common pilot signal #2 and a common control channel #2 are input, combiners 106 (106₁, 106₂, 106₃, 106₄) for combining an output signal of the pre-encoding processor 102 and an output signal of the pre-encoding processor 104, a pre-encoding processor 112, into which a common pilot signal #3 is input, a pre-encoding processor 116, into which a common pilot signal #4 is input, combiners 114 (114₁, 114₂, 114₃, 114₄) for combining an output signal of the combiner 106 and an output signal of the pre-encoding processor 112, combiners 118 (118₁, 118₂, 118₃, 118₄) for combining an output signal of the combiners 114 (114₁, 114₂, 114₃, 111₄) and an output signal of the pre-encoding processor 116, and antennas 108 (108₁, 108₂, 108₃, 108₄) for transmitting output signals from the respective combiners 118.

The common pilot signal #1 and the common pilot signal #2 are the same signals.

The common pilot signals #3 and #4 may be the same signals as the common pilot signals #1 and #2, or may be set as symbols minimally necessary for measuring the CQI. For example, the density in mapping of the present signals is set smaller than that in mapping of the common pilot signals #1 and #2.

The density in mapping of the common control channels #1 and #2 is the same as described previously.

The common pilot signal #1 and the common control channel #1 are input to the pre-encoding processor 102, branching into 4 antennas.

In the pre-encoding processor 102, a pre-coding weight "a" is multiplied with the respective input common pilot signal #1 and common control channel #1. For example, in the multipliers 102₁, 102₂, 102₃, and 102₄, the pre-encoding weights a₁, a₂, a₃, and a₄ are respectively multiplied.

Signals output from the multipliers 102₁, 102₂, 102₃, and 102₄ are respectively input to the combiners 106₁, 106₂, 106₃, and 106₄.

The common pilot signal #2 and the common control channel #2 are input to the pre-encoding processor 104, branching into 4 antennas. In the pre-encoding processor 104, a pre-encoding weight "b" is multiplied with the respective input common pilot signal #2 and common control channel #2. For example, in the multipliers 104₁, 104₂, 104₃, and 104₄, the pre-encoding weights b₁, b₂, b₃, and b₄ are respectively multiplied.

The common pilot signals #3 and #4 are input to the pre-encoding processor 112, branching into 4 antennas in the pre-encoding processor 112, where a pre-encoding weight "c" is multiplied with the respective input common pilot signal #3. For example, in the multipliers 112₁, 112₂, 112₃, and 112₄, the pre-encoding weights c₁, c₂, c₃, and c₄ are respectively multiplied.

The common pilot signal #4 is input to the pre-encoding processor 116, branching into 4 antennas. In the pre-encoding processor 116, a pre-encoding weight "d" is multiplied with the respective input common pilot signal #4. For example, in the multipliers 116₁, 116₂, 116₃, and 116₄, the pre-encoding weights d₁, d₂, d₃, and d₄ are respectively multiplied.

Here, the pre-encoding weights a, b, c, and d are orthogonal to each other, which norm is set as 1.

Signals output from the multipliers 104₁, 104₂, 104₃, and 104₄ are respectively input to the combiners 106₁, 106₂, 106₃, and 106₄.

In the combiners 106₁, 106₂, 106₃, and 106₄, signals output from the multipliers 102₁, 102₂, 102₃, and 102₄ are respectively combined with signals output from the multipliers 104₁, 104₂, 104₃, and 104₄. Signals output from the combiners 106₁, 106₂, 106₃, and 106₄ are respectively input to the combiners 114₁, 114₂, 114₃, and 114₄.

In the combiners 114₁, 114₂, 114₃, and 114₄, signals output from the combiners 106₁, 106₂, 106₃, and 106₄ are respectively combined with signals output from the multipliers 112₁, 112₂, 112₃, and 112₄. Signals output from the combiners 114₁, 114₂, 114₃, and 114₄ are respectively input to the combiners 118₁, 118₂, 118₃, and 118₄.

In the combiners 118₁, 118₂, 118₃, and 118₄, signals output from the combiners 114₁, 114₂, 114₃, and 114₄ are respectively combined with signals output from the multipliers 116₁, 116₂, 116₃, and 116₄.

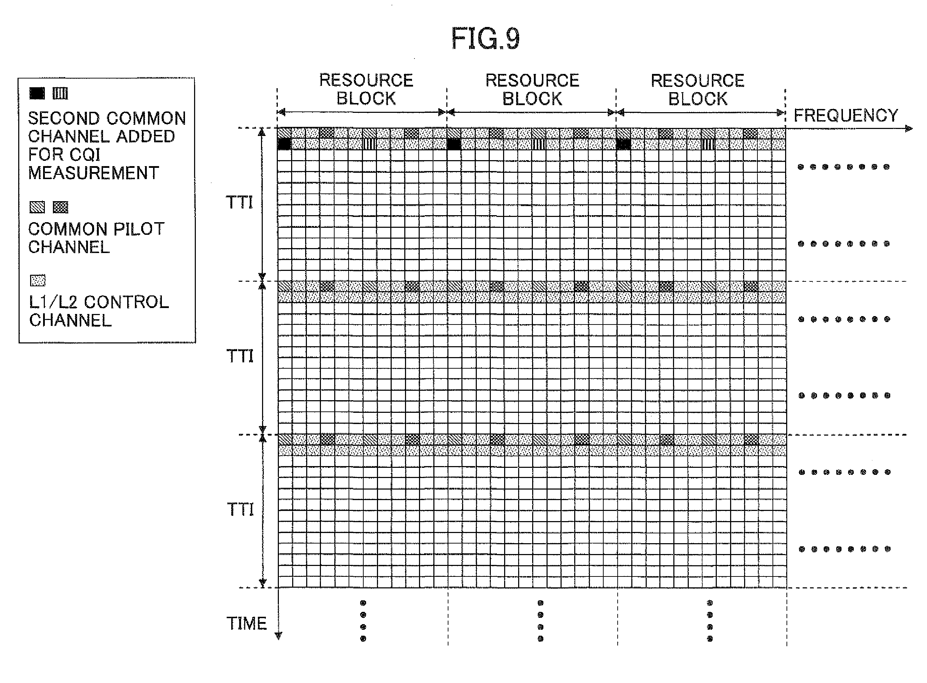

As shown in FIG. 6, in addition to the common pilot channels which were pre-encoded with the two fixed values "a" and "b", common pilot channels which were pre-encoded with two fixed values "c" and "d" are multiplexed at respectively different time-frequency domains. In FIG. 9, an exemplary mapping of the pilot channels for measuring the CQI is shown. In FIG. 9, an exemplary mapping of the L1/L2 control channels and the pilot channels for measuring the CQI is shown. The same applies to the common control channels.

In FIG. 9, the common pilot channels which have been pre-encoded with the fixed value "a", the common pilot channels which have been pre-encoded with the fixed value "b", the common pilot channels which have been pre-encoded with the fixed value "c", and the common pilot channels which have been pre-encoded with the fixed value "d" are mapped at intervals in the frequency domain. The density of the common pilot channels which have been pre-encoded with the fixed value "c", and the common pilot channels which have been pre-encoded with the fixed value "d" become smaller than that of the common pilot channels which have been pre-encoded with the fixed value "a", and the common pilot channels which have been pre-encoded with the fixed value "b".

The combined signals are respectively transmitted from the antennas 108₁, 108₂, 108₃, and 108₄.

Now, a base station apparatus according to a fourth embodiment of the present invention is described.

The present embodiment is described for the base station apparatus having four antennas, but may be applied to a case with more than one antenna.

The base station apparatus 100 according to the present embodiment transmits dedicated pilot channels in order to demodulate the pre-encoded data channels and L1/L2 control channels, and the above-described coding block 2. The dedicated pilot channels are transmitted per user, and only from a resource block in which the data channels and L1/L2 control channels are transmitted. Moreover, the same pre-encoding as for the data channels and the L1/L2 control channels is performed.

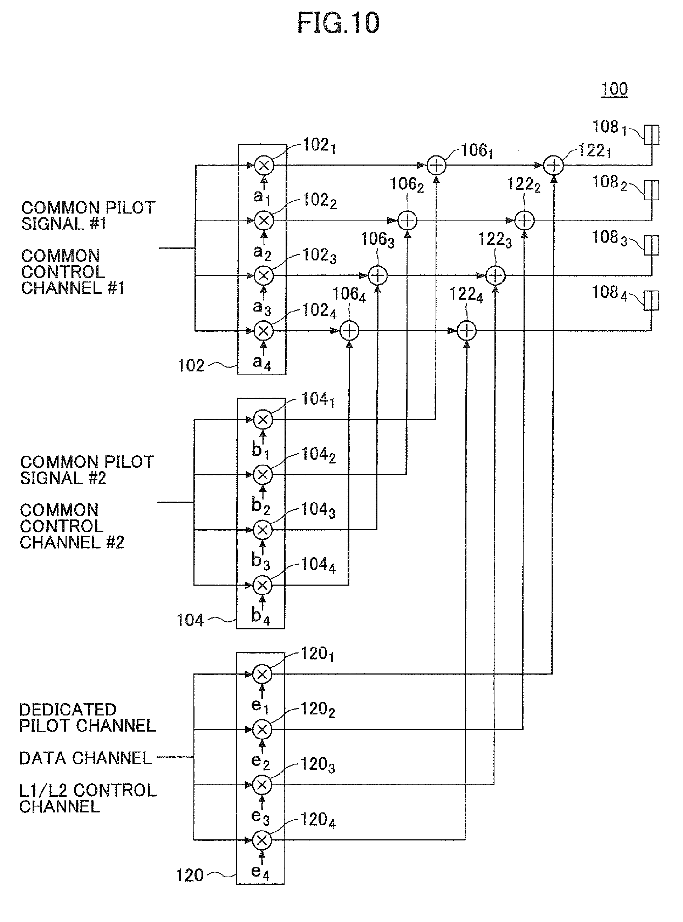

The base station 100, as shown in FIG. 10, includes a pre-encoding processor 102, into which the common pilot signal #1 and the common control channel #1 are input, a pre-encoding processor 104, into which the common pilot signal #2 and the common control channel #2 are input, combiners 106 (106₁, 106₂, 106₃, 106₄) for combining an output signal of the pre-encoding processor 102 and an output signal of the pre-encoding processor 104, a pre-encoding processor 120, into which the dedicated pilot channels, data channels, and L1/L2 control channels are input, combiners 122 (122₁, 122₂, 122₃, 122₄) for combining an output signal of the combiner 106 and an output signal of the pre-encoding processor 120, and antennas 108 (108₁, 108₂, 108₃, 108₄) for transmitting output signals from the respective combiners 122.

The common pilot signal #1 and the common pilot signal #2 are the same signals.

The same as the above-described embodiment applies for the common control channels #1 and #2.

The common pilot signal #1 and the common control channel #1 are input to the pre-encoding processor 102, branching into 4 antennas. In the pre-encoding processor 102, a pre-coding weight "a", is multiplied with the respective input common pilot signal #1 and common control channel #1. For example, in the multipliers 102₁, 102₂, 102₃, and 102₄, the pre-encoding weights a₁, a₂, a₃, and a₄ are respectively multiplied.

Signals output from the multipliers 102₁, 102₂, 102₃, and 102₄ are respectively input to the combiners 106₁, 106₂, 106₃, and 106₄.

The common pilot signal #2 and the common control channel #2 are input to the pre-encoding processor 104, branching into 4 antennas. In the pre-encoding processor 104, a pre-encoding weight "b" is multiplied with the respective input common pilot signal #2 and common control channel #2. For example, in the multipliers 1041.1042, 1043, and 1044, the pre-encoding weights b₁, b₂, b₃, and b₄ are respectively multiplied.

The dedicated pilot channels, the data channels, and the L1/L2 control channels are input to the pre-encoding processor 120, branching into 4 antennas. In the pre-encoding processor 120, a pre-coding weight "a" is multiplied with the respective input common pilot channels, data channels and L1/L2 control channels. For example, in the multipliers 120₁, 120₂, 120₃, and 120₄, pre-encoding weights e1, e2, e3, and e4 are respectively multiplied.

Here, the pre-encoding weights "a" and "b" are orthogonal to each other, which norm is set as 1. The pre-encoding weight e is not a fixed value, and determined according to the user.

Signals output from the multipliers 104₁, 104₂, 104₃, and 104₄ are respectively input to the combiners 106₁, 106₂, 106₃, and 106₄.

In the combiners 106₁, 106₂, 106₃, and 106₄, signals output from the multipliers 102₁, 102₂, 102₃, and 102₄ are respectively combined with signals output from the multipliers 104₁, 104₂, 104₃, and 104₄. Signals output from the combiners 106₁, 106₂, 106₃, and 106₄ are respectively input to the combiners 122₁, 122₂, 122₃, and 122₄.

In the combiners 122₁, 122₂, 122₃, and 122₄, signals output from the combiners 106₁, 106₂, 106₃, and 106₄ are respectively combined with signals output from the multipliers 120₁, 120₂, 120₃, and 120₄.

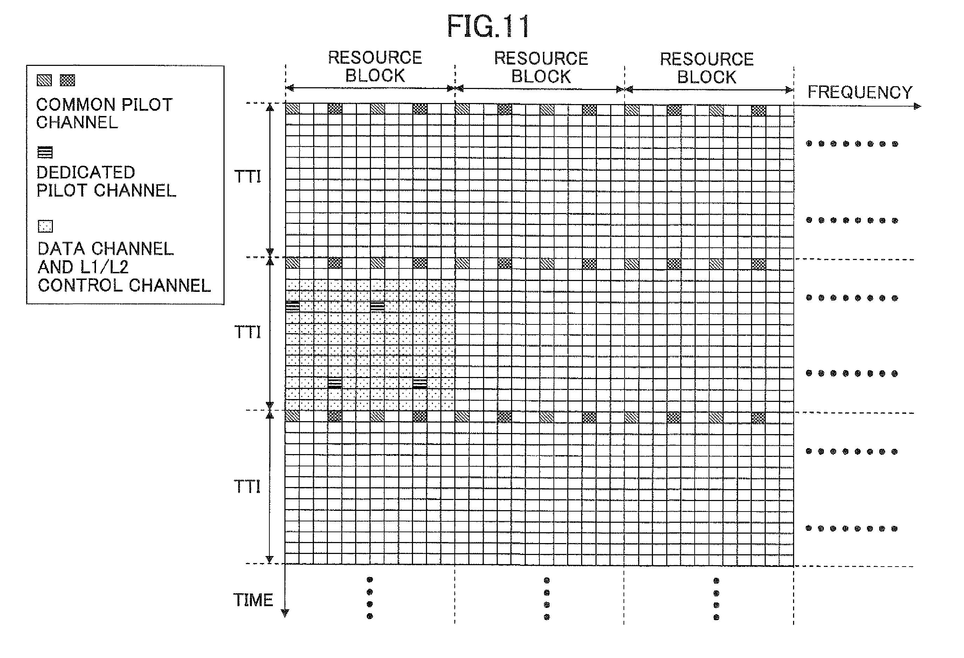

As shown in FIG. 11, common pilot channels which were pre-encoded with the two fixed values "a" and "b" are multiplexed at respectively different time-frequency domains. In FIG. 11, an exemplary mapping of the dedicated pilot channels is shown. In FIG. 11, the common pilot channel which have been pre-encoded with the fixed value "a" and the common pilot channel which have been pre-encoded with the fixed value "b" are mapped at intervals in the frequency domain. Moreover, the dedicated pilot channels are mapped to resource blocks in which the data channels and/or the L1/L2 control channels are transmitted.

The combined signals are respectively transmitted from the antennas 108₁, 108₂, 108₃, and 108₄. The dedicated pilot channels are only transmitted from the resource blocks in which the data channels are transmitted.

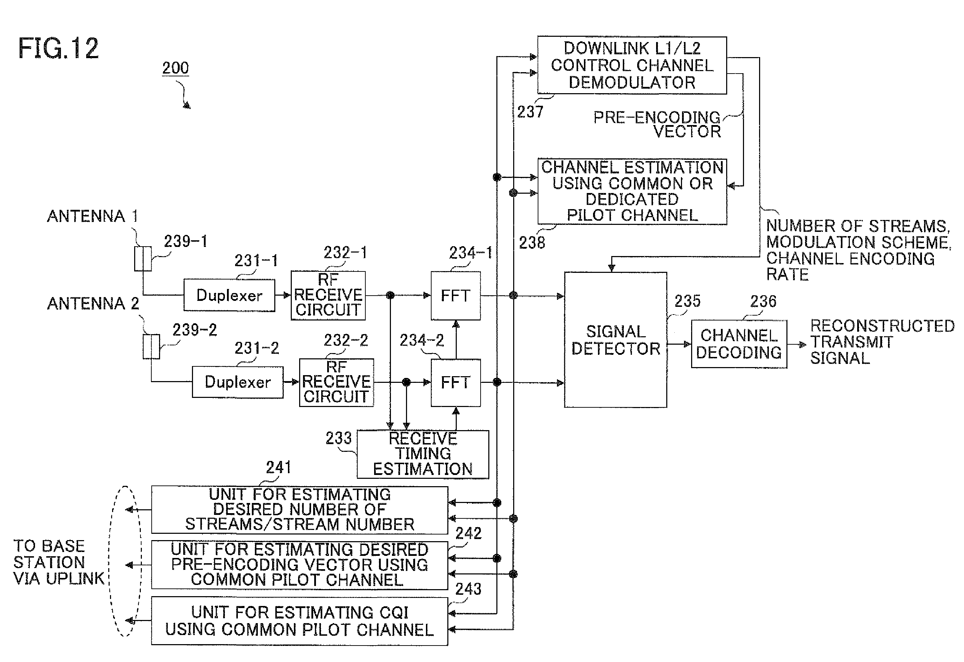

Now a mobile station according to the embodiments of the present invention is described with reference to FIG. 12.

The signal received at respective multiple antennas 239-1 and 239-2 of the mobile station apparatus 200 is separated from a transmit signal at a duplexer 231, converted to a baseband signal at an RF receive circuit 232, and fast Fourier transformed at an FFT unit 234. At the FFT unit 234, an estimated value which is estimated at the receive timing estimation unit 233 is input. Shared data channels are input to a signal detector 235. In the meantime, downlink L1/L2 control channels which are incoming in association with the shared data channel are demodulated at a downlink L1/L2 control channel demodulator 237.

Of a set of information included in the L1/L2 control channel, the number of streams, a modulating scheme, and a channel encoding rate are input to the signal detector 235 so as to be used for demodulating the received shared data channel. In the meantime, pre-encoding vector information is input to a channel estimation unit 238 using a pilot channel. The shared data channel which is detected at the signal detector 235 is decoded at a channel decoder 236, reconstructing a transmit signal.

Outputs of the FFT units 234 are also input to a desired number-of-streams and stream number estimating unit 241 using common pilot channels, a desired pre-encoding vector estimating unit 242 using the common pilot channels, and a CQI estimating unit 243 using the common pilot channels. The estimated desired number of streams/stream number, desired re-encoding vector, and CQI are reported to the base station via uplink.

The embodiments of the present invention allows switching between the common/dedicated pilot channels according to the channel type, making it possible to reduce the pilot overhead at the time of MIMO transmission in comparison to the related art base station apparatuses in which all common/dedicated pilots are transmitted all the time.

Moreover, the common control channels which are demodulated using the common pilot channel are unitarily pre-encoded with the first and second weights which are the same as for the common pilot channel, and apply transmit diversity for transmitting, making it possible to demodulate, at the receiver, with two common pilot channels regardless of the number of antennas at the base station.

Moreover, especially when the number of antennas is no less than four, transmit power amplifiers for all antennas may be used, making it possible to improve the transmit power of the common pilot channel.

The present invention has been described by breaking down into a number of embodiments for the convenience of explanation. However, the breakdown to the embodiments is not essential to the present invention, so that two or more embodiments may be used as required. While specific numerical value examples are used to facilitate understanding of the present invention, such numerical values are merely examples, so that any appropriate value may be used unless specifically indicated otherwise.

As described above, while the present invention is described with reference to specific embodiments, the respective embodiments are merely examples, so that a skilled person will understand variations, modifications, alternatives, and replacements. For convenience of explanation, while the apparatus according to the embodiments of the present invention is explained using functional block diagrams, such apparatus as described above may be implemented in hardware, software, or a combination thereof. The present invention is not limited to the above embodiments, so that variations, modifications, alternatives, and replacements are included in the present invention without departing from the spirit of the present invention.

The present application claims priority based on Japanese Patent Application No. 2006-272343 filed on October 3, 2006 with the Japanese Patent Office, the entire contents of which are hereby incorporated herein by reference.

The base station apparatus according to the present invention may be applied to wireless communications systems.

## Claims

1. A base station apparatus, comprising:
multiple antennas;
a first pre-encode processing unit which multiplies one or more first weights to one or more common pilot channels;
a second pre-encode processing unit which multiplies, to the one or more common pilot channels, one or more second weights which are orthogonal to the first weights; and
a combining unit which combines the first-weights-multiplied common pilot channels and the second-weights-multiplied common pilot channels, wherein
the combined common pilot channels are transmitted from the multiple antennas.

2. The base station apparatus as claimed in claim 1, wherein
the first pre-encode processing unit multiplies the first weights with one or more common control channels,
the second pre-encode processing unit multiplies the second weights with one or more common control channels, and
the combining unit combines the first-weights-multiplied common control channels and the second-weights-multiplied common control channels.

3. The base station apparatus as claimed in claim 2, comprising:
a branching unit which branches the common pilot channel and the common control channel, wherein
the first pre-encode processing unit multiplies the first weight with the branched respective common pilot channel and the branched respective common control channel,
and the second pre-encode processing unit multiplies the second weight with the branched respective common pilot channel and the branched respective common control channel.

4. The base station apparatus as claimed in claim 1, wherein
the first common pilot channels are transmitted at intervals at which the common control channels and/or one or more L1/L2 control channels are transmitted.

5. The base station apparatus as claimed in claim 1, comprising:
a third pre-encode processing unit which pre-encodes one or more data channels and/or one or more L1/L2 control channels with one or more third weights which are different from the first weights and the second weights, wherein
the third pre-encode processing unit pre-encodes one or more dedicated pilot channels with the third weights,
and the dedicated pilot channel is transmitted only from a resource block in which the data channel is transmitted.

6. The base station apparatus as claimed in claim 1, comprising:
N antennas, where N is an integer greater than 1; and an N-th pre-encode processing unit which multiplies N-th weights which are orthogonal to the first and second weights with (N-2) second common pilot channels used for CQI measurement, wherein
the combining unit combines the combined common pilot channels to the N-th weights-multiplied second common pilot channels.

7. The base station apparatus as claimed in claim 6, wherein
the (N-2) second common pilot channels used for CQI measurement are transmitted at intervals at which the CQI measurement is performed.
